# EUROPEAN PATENT SPECIFICATION

(11) **EP 3 907 205 B1**
(45) Date of publication and mention of the grant of the patent: **11.03.2026**
(21) Application number: 21173091.6
(22) Date of filing: 10.05.2021
(51) Int. Cl.: C04B 35/583, C04B 35/622, C04B 35/626, C04B 35/638, C09K 3/14

(54) **METHOD OF MANUFACTURING A SOLID LUBICANT FOR AN ABRADABLE COATING**
VERFAHREN ZUR HERSTELLUNG EINES FESTGLEITMITTELS FÜR EINE ABREIBBARE BESCHICHTUNG
PROCÉDÉ DE FABRICATION D'UN LUBRIFIANT SOLIDE POUR UN REVÊTEMENT ABRADABLE

(30) Priority: 08.05.2020 US 202016870472
(43) Date of publication of application: 10.11.2021
(73) Proprietor: RTX Corporation, Farmington, CT 06032 (US)
(72) Inventor: STROCK, Christopher W., Kennebunk, 04043 (US)
(74) Representative: Dehns

(56) References cited:
- CN-A- 102 660 370
- US-A- 5 409 622
- US-A1- 2005 124 505

## Description

### BACKGROUND

The present disclosure is directed to the improved process to produce solid lubricant filler powder used in abradable coating manufacture.

Conventional crushed hBN has poor flow and deposition characteristics that lead to inefficient and poorly controlled manufacturing processes for abradable coatings. Agglomeration of this material by spray drying with the desirable bentonite binder material is inefficient and has poor repeatability due to low material density and incompatibility with standard processing equipment. The bentonite binder not only acts to bind the agglomerates, but also aids in thermal spray deposition due to non-melting behavior of hBN. It is desired to have a low dust (<5wt% at <=11 micron), free flowing hBN powder with bentonite binder in order to achieve a stable and efficient manufacturing process for abradable coatings. US5409622A, US2005/124505A1 and CN102660370A disclose formulations of the prior art.

### SUMMARY

In an aspect of the invention, a process for producing solid lubricant filler powder used in abradable coating manufacture is provided according to claim 1.

A further embodiment of any of the foregoing embodiments may additionally and/or alternatively include the process further comprising recycling the composite material that is deemed to be too coarse and too fine.

A further embodiment of any of the foregoing embodiments may additionally and/or alternatively include the process wherein the step of breaking up the composite material into a variety of sizes comprises crushing the composite material.

A further embodiment of any of the foregoing embodiments may additionally and/or alternatively include the process further comprising pressing the mixture of the bentonite clay and the hexagonal boron nitride powder.

A further embodiment of any of the foregoing embodiments may additionally and/or alternatively include the process further comprising applying a calcine heat treatment to the mixture of the bentonite clay and the hexagonal boron nitride powder after at least one of drying the composite material; and de-bindering the composite material.

A further embodiment of any of the foregoing embodiments may additionally and/or alternatively include the step of pressing comprises at least one of roll pressing the mixture of the bentonite clay and the hexagonal boron nitride powder, and extruding the mixture of the bentonite clay and the hexagonal boron nitride powder.

A further embodiment of any of the foregoing embodiments may additionally and/or alternatively include the process further comprising adding a binder with the hexagonal boron nitride and the bentonite clay prior to the mixing step.

A further embodiment of any of the foregoing embodiments may additionally and/or alternatively include the hexagonal boron nitride is crushed prior to mixing with the bentonite clay.

The method includes the step of segregating the composite material comprises segregating the composite material based on size selected from the group consisting of a coarse size, a fine size and a desired fraction size.

A further embodiment of any of the foregoing embodiments may additionally and/or alternatively include the process prior to the step of mixing a bentonite clay and a hexagonal boron nitride powder to form a mixture of the bentonite clay and a hexagonal boron nitride powder, further comprising combining the bentonite clay with water and a dispersant; and ball milling the bentonite clay, the water and the dispersant.

A further embodiment of any of the foregoing embodiments may additionally and/or alternatively include the process after the combining step further comprising mixing the bentonite clay, the water, the dispersant, and the hexagonal boron nitride in a disperser mixer.

A further embodiment of any of the foregoing embodiments may additionally and/or alternatively include the step of heat treating comprises calcine heat treatment.

A further embodiment of any of the foregoing embodiments may additionally and/or alternatively include the desired fraction size ranges from 10 to 150 microns.

A further embodiment of any of the foregoing embodiments may additionally and/or alternatively include the process further comprising bindering the composite material; and de-bindering the composite material.

A further embodiment of any of the foregoing embodiments may additionally and/or alternatively include the heat treating that can include a minimum temperature of 500 degrees Centigrade (Celsius) and range as high as 1000 degrees Centigrade (Celsius).

The process is to form a composite of calcined bentonite and hBN by one of several manufacturing methods and then to fracture the composite into particles, treat the particles for flowability and size the particles for use in thermal spray.

Other details of the process are set forth in the following detailed description and the accompanying drawings wherein like reference numerals depict like elements.

### BRIEF DESCRIPTION OF THE DRAWINGS

Fig. 1 is a process diagram of an exemplary process.
Fig. 2 is a process diagram of an exemplary process.
Fig. 3 is a process diagram of an exemplary process.

### DETAILED DESCRIPTION

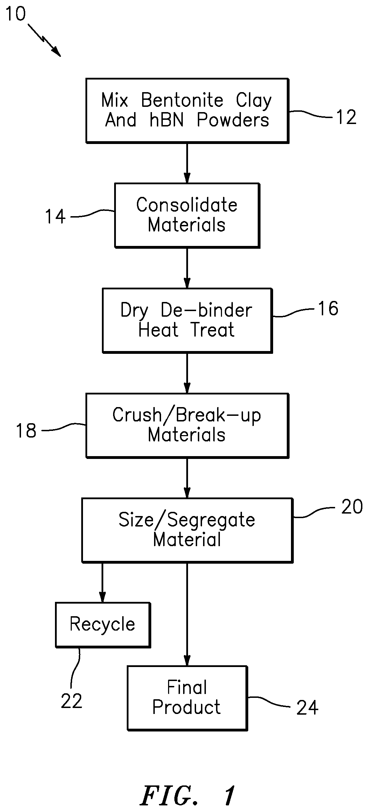

Referring to Fig. 1, a process diagram discloses the exemplary process for producing solid lubricant filler powder used in abradable coating manufacture. The process 10 is to form a composite of calcined bentonite and hBN and then to fracture the composite into particles, treat the particles for flowability and size the particles for use in thermal spray. At step 12, bentonite clay and hexagonal boron nitride (hBN) powders are mixed. The bentonite clay can include Al₂H₂O₆Si. The material can include aluminosilicates or mixtures of aluminum oxide and silicon oxide. In an exemplary embodiment, the bentonite clay and hBN can be mixed with optional fugitive solvents and binders such as wax, acrylic or polyvinyl alcohol (PVA), water-soluble synthetic polymer and the like. At step 14, the process involves consolidating the materials to form a composite by tape casting. (Tape casting may provide a benefit to manufacturing yield and consistency of particle size as thickness of the material may be on the order of the desired particle size). At step 16, the process includes drying, de-binding and calcine heat treating of the composite materials in a batch or a continuous process (in air). The step of heat treating the composite materials can be performed at a minimum temperature of 500 degrees Centigrade (Celsius), more desirably 750 degrees Centigrade (Celsius) and as high as 1000 degrees Centigrade (Celsius). Higher temperatures makes the agglomerate stronger. Calcination removes the water molecules from the clay and further heat treatment sinters the bentonite. At step 18, the process includes crushing or breaking up the calcined material to form angular particles. In an alternative embodiment, it is possible to crush the composite material prior to calcining. In an alternative optional embodiment, it is possible to tumble or agitate the composite material particles to round sharp edges and corners to improve powder flow characteristics. At step 20, the process includes sizing the composite material and segregating the composite material. At step 22, optionally in the process, removing and recycling the undesirable size fraction of the composite materials can be performed. Desirable sizes of the composite material for thermal spray can be from 10 to 150 microns. In an exemplary embodiment the size of the composite material can be from 12 to 100 microns. In another exemplary embodiment the size of the composite material can be from 16 to 75 microns. A composite material can have a median value of D50 size, or a size at which 50wt% is both coarser and finer, would be 20 to 75 microns or from 22 to 50 microns or from 25 to 35 microns, (respectively). At step 24, the process produces the final product comprising a free flowing, low dust (<5wt% at <=11 micron), powder of composite hBN and calcined bentonite.

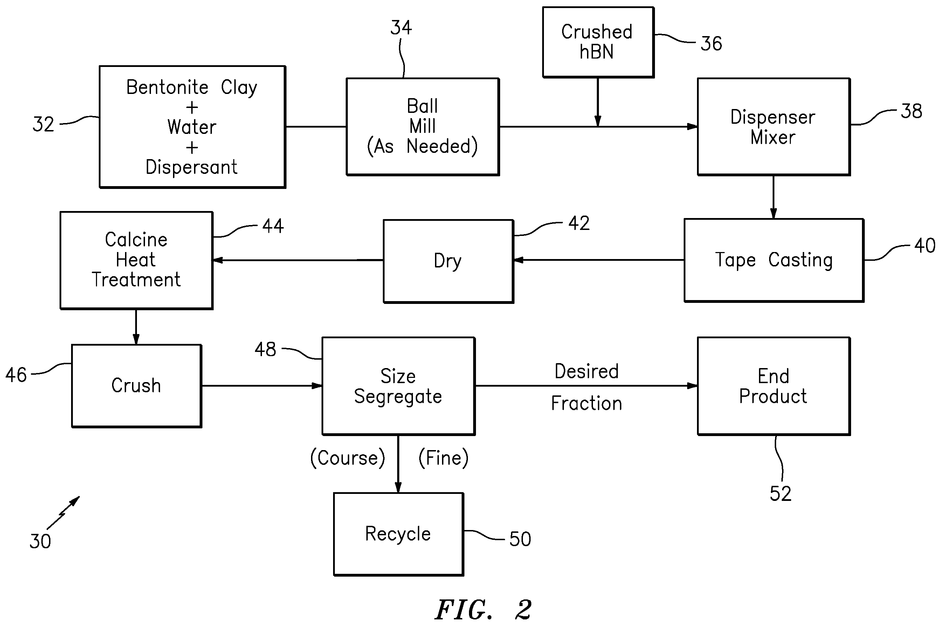

Referring also to Fig. 2 an exemplary process diagram illustrates an alternative process 30 to create the final product. At step 32 of the process, bentonite clay water and dispersant are provided. At step 34, the bentonite clay with water and dispersant may optionally be ball milled as needed to prepare the bentonite clay for mixing. At step 36 crushed hBN is combined with the bentonite clay with water and dispersant. At step 38 the composition of the hBN with bentonite clay with water and dispersant is mixed in a disperser mixer. At step 40 the composition is processed in a tape casting machine. The thickness of a roll pressed, extruded or tape cast preform would be such that the smallest thickness or width dimension would be larger than, or preferably equal to a maximum particle size dimension after heat treatment. In an exemplary embodiment, for a tape cast slurry of 1/3 volume loading of solids, the wet thickness would be 3x the desired calcined particle size. For example, for a 50 micron calcined particle, it would be desired to have a 150 micron thick wet tap. The tape casting output composition is then dried at step 42. The composition is calcine heat treated at step 44. The output composition from the calcine heat treatment is then crushed at step 46 to produce a composite material of varying sizes. At step 48, the composite material is segregated by size. The composite material that is sized as being too coarse or too fine is recycled at step 50. The desired fraction size of composite material is sent out as final product at step 52, resulting in a free flowing, low dust, powder of composite hBN and calcined bentonite.

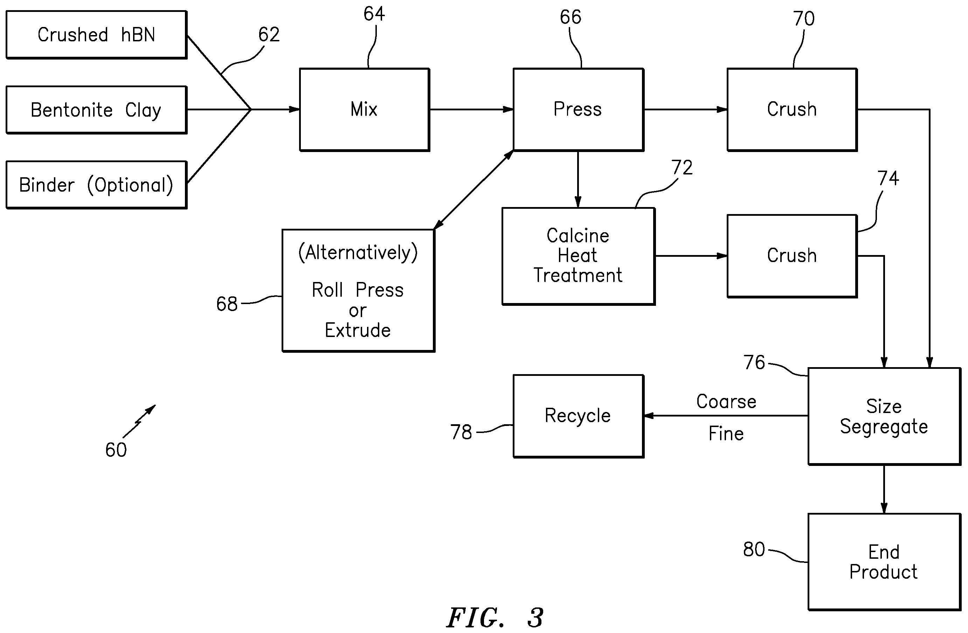

Fig. 3 includes an embodiment of the process 60 that is not according to the invention to produce the composite. At step 62 crushed hBN, bentonite clay and an optional binder (organic additive) are combined and then mixed at step 64. The binder/organic additive can include wax, stearate or polymer and the like. After mixing, the composition is pressed at step 66. Alternatively, shown at step 68, the composition can be roll pressed or extruded. At step 70 the composition can be crushed. In an alternative, the composition can receive a calcine heat treatment at step 72 before being crushed at step 74. After being crushed, the composite material can be size segregated at step 76. The composite material that is too coarse or too fine can be recycled at step 78. The end product is produced at step 80.

The process steps disclosed in Fig. 1, Fig. 2 and Fig. 3 can be interchanged, added and omitted as deemed necessary.

A technical advantage of the disclosed process includes the production of a composite material that is well suited for thermal spray as a soft, dry lubricant filler in abradable coatings.

Another technical advantage of the disclosed process includes production of a composite material having a consistency of composition and particle characteristics that can result in a more repeatable abradable coating process compared with composite hBN + calcined bentonite produced by conventional spray dry agglomeration methods.

Another technical advantage of the disclosed process includes a manufacturing process of the materials that is more repeatable in particle size, density and composition and has better process yield than the prior spray dry agglomeration processes.

There has been provided a process to produce solid lubricant filler powder used in abradable coating manufacture. While the process has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A process for producing a solid lubricant filler powder used in abradable coating manufacture comprising:
mixing (12) a bentonite clay and a hexagonal boron nitride powder to form a mixture of said bentonite clay and said hexagonal boron nitride powder;
consolidating (14) the bentonite clay and the hexagonal boron nitride powder utilizing tape casting to form a composite material;
heat treating (16) the composite material to at least 500 degrees centigrade (Celsius);
breaking up (18) the composite material into a variety of sizes; and
segregating (20) the composite material based on size selected from the group consisting of a coarse size, a fine size and a desired fraction size to produce a final product of free flowing, low dust powder of composite hexagonal boron nitride and calcined bentonite.

2. The process according to claim 1, further comprising:
recycling (22) said composite material that is deemed to be too coarse and too fine.

3. The process according to claim 1 or 2, wherein said step of breaking up (18) the composite material into a variety of sizes comprises crushing said composite material.

4. The process according to claim 1, 2 or 3, further comprising:
pressing (66) said mixture of said bentonite clay and said hexagonal boron nitride powder to consolidate said mixture.

5. The process according to claim 4, wherein said step of pressing comprises at least one of:
roll pressing (68) said mixture of said bentonite clay and said hexagonal boron nitride powder, and
extruding said mixture of said bentonite clay and said hexagonal boron nitride powder.

6. The process according to any preceding claim, further comprising:
applying a calcine heat treatment (44, 72) to said mixture of said bentonite clay and said hexagonal boron nitride powder after at least one of:
drying (42) the composite material; and
de-bindering the composite material.

7. The process according to any preceding claim, further comprising:
adding a binder (62) with said hexagonal boron nitride and said bentonite clay prior to said mixing step.

8. The process according to any preceding claim, wherein said hexagonal boron nitride is crushed prior to mixing with the bentonite clay.

9. The process according to any preceding claim, prior to said step of mixing a bentonite clay and a hexagonal boron nitride powder to form a mixture of said bentonite clay and a hexagonal boron nitride powder, further comprising:
combining said bentonite clay with water and a dispersant (32); and
ball milling (34) the bentonite clay, the water and the dispersant.

10. The process according to claim 9, further comprising:
mixing the bentonite clay, the water, the dispersant, and the hexagonal boron nitride in a disperser mixer

11. The process according to claim 10, further comprising drying (42) the composite material.

12. The process according to any preceding claim, wherein said desired fraction size ranges from 10 to 150 microns.

13. The process according to any preceding claim, wherein said step of heat treating (16) comprises calcine heat treatment (44, 72).

14. The process according to any preceding claim, further comprising:
bindering the composite material; and
de-bindering the composite material.

15. The process according to any preceding claim, wherein said heat treating includes a minimum temperature of 500 degrees Centigrade (Celsius) and range as high as 1000 degrees Centigrade (Celsius).

## Patentansprüche

1. Verfahren zum Produzieren eines Füllstoffpulvers für ein Festgleitmittel zur Verwendung bei der Herstellung abreibbarer Beschichtungen, umfassend:
Mischen (12) eines Bentonit-Tons und eines Pulvers aus hexagonalem Bornitrid zum Ausbilden einer Mischung aus dem Bentonit-Ton und dem Pulver aus hexagonalem Bornitrid;
Verfestigen (14) des Bentonit-Tons und des Pulvers aus hexagonalem Bornitrid unter Nutzen von Foliengießen zum Ausbilden eines Verbundmaterials;
Wärmebehandeln (16) des Verbundmaterials auf mindestens 500 Grad Celsius;
Aufbrechen (18) des Verbundmaterials in eine Vielfalt von Größen; und
Trennen (20) des Verbundmaterials basierend auf Größe, ausgewählt aus der Gruppe, bestehend aus einer groben Größe, einer feinen Größe und einer gewünschten Fraktionsgröße, zum Produzieren eines Endprodukts aus rieselfähigem, staubarmem Pulver aus einem Verbundmaterial aus hexagonalem Bornitrid und kalziniertem Bentonit.

2. Verfahren nach Anspruch 1, ferner umfassend:
Recycling (22) des Verbundmaterials, das als zu grob und zu fein eingestuft wird.

3. Verfahren nach Anspruch 1 oder 2, wobei der Schritt des Aufbrechens (18) des Verbundmaterials in eine Vielfalt von Größen Zerkleinern des Verbundmaterials umfasst.

4. Verfahren nach Anspruch 1, 2 oder 3, ferner umfassend:
Pressen (66) der Mischung aus dem Bentonit-Ton und dem Pulver aus hexagonalem Bornitrid zum Verfestigen der Mischung.

5. Verfahren nach Anspruch 4, wobei der Schritt des Pressens mindestens eines der Folgenden umfasst:
Walzenpressen (68) der Mischung aus dem Bentonit-Ton und dem Pulver aus hexagonalem Bornitrid und
Extrudieren der Mischung aus dem Bentonit-Ton und dem Pulver aus hexagonalem Bornitrid.

6. Verfahren nach einem der vorhergehenden Ansprüche, ferner umfassend:
Anwenden einer Kalzinierwärmebehandlung (44, 72) auf die Mischung aus dem Bentonit-Ton und dem Pulver aus hexagonalem Bornitrid nach mindestens einem der Folgenden:
Trocknen (42) des Verbundmaterials; und
Entbindern des Verbundmaterials.

7. Verfahren nach einem der vorhergehenden Ansprüche, ferner umfassend:
Zugeben eines Bindemittels (62) zu dem hexagonalen Bornitrid und dem Bentonit-Ton vor dem Mischschritt.

8. Verfahren nach einem der vorhergehenden Ansprüche, wobei das hexagonale Bornitrid vor Mischen mit dem Bentonit-Ton zerkleinert wird.

9. Verfahren nach einem der vorhergehenden Ansprüche, ferner umfassend vor dem Schritt des Mischens eines Bentonit-Tons und eines Pulvers aus hexagonalem Bornitrid zum Ausbilden einer Mischung aus dem Bentonit-Ton und einem hexagonalen Bornitridpulver:
Kombinieren des Bentonit-Tons mit Wasser und einem Dispergiermittel (32); und
Kugelmahlen (34) des Bentonit-Tons, des Wassers und des Dispergiermittels.

10. Verfahren nach Anspruch 9, ferner umfassend:
Mischen des Bentonit-Tons, des Wassers, des Dispergiermittels und des hexagonalen Bornitrids in einem Dispergiermischer.

11. Verfahren nach Anspruch 10, ferner umfassend Trocknen (42) des Verbundmaterials.

12. Verfahren nach einem der vorhergehenden Ansprüche, wobei die gewünschte Fraktionsgröße im Bereich von 10 bis 150 Mikrometern liegt.

13. Verfahren nach einem der vorhergehenden Ansprüche, wobei der Schritt des Wärmebehandelns (16) eine Kalzinierwärmebehandlung (44, 72) umfasst.

14. Verfahren nach einem der vorhergehenden Ansprüche, ferner umfassend:
Bindern des Verbundmaterials; und
Entbindern des Verbundmaterials.

15. Verfahren nach einem der vorhergehenden Ansprüche, wobei das Wärmebehandeln eine Mindesttemperatur von 500 Grad Celsius und einen Bereich bis zu 1000 Grad Celsius beinhaltet.

## Revendications

1. Procédé de production d'une poudre de charge lubrifiante solide utilisée dans la fabrication d'un revêtement abradable, comprenant :
le mélange (12) d'une argile bentonite et d'une poudre de nitrure de bore hexagonal pour former un mélange de ladite argile bentonite et de ladite poudre de nitrure de bore hexagonal ;
la consolidation (14) de l'argile bentonite et de la poudre de nitrure de bore hexagonal en utilisant le coulage en bande pour former un matériau composite ;
le traitement thermique (16) du matériau composite à au moins 500 degrés (Centrigade) Celsius ;
la fragmentation (18) du matériau composite en différentes tailles ; et
la ségrégation (20) du matériau composite sur la base de la taille sélectionnée dans le groupe constitué d'une taille grossière, d'une taille fine et d'une taille de fraction souhaitée pour produire un produit final de poudre fluide et à faible teneur en poussière de nitrure de bore hexagonal composite et de bentonite calcinée.

2. Procédé selon la revendication 1, comprenant également :
le recyclage (22) dudit matériau composite qui est jugé trop grossier et trop fin.

3. Procédé selon la revendication 1 ou 2, dans lequel ladite étape de fragmentation (18) du matériau composite en différentes tailles comprend le broyage dudit matériau composite.

4. Procédé selon la revendication 1, 2 ou 3, comprenant également :
le pressage (66) dudit mélange de ladite argile bentonite et de ladite poudre de nitrure de bore hexagonal pour consolider ledit mélange.

5. Procédé selon la revendication 4, dans lequel ladite étape de pressage comprend au moins l'une des opérations suivantes :
le pressage au rouleau (68) dudit mélange de ladite argile bentonite et de ladite poudre de nitrure de bore hexagonal, et
l'extrusion dudit mélange de ladite argile bentonite et de ladite poudre de nitrure de bore hexagonal.

6. Procédé selon une quelconque revendication précédente, comprenant également :
l'application d'un traitement thermique de calcination (44, 72) audit mélange de ladite argile bentonite et de ladite poudre de nitrure de bore hexagonal après au moins l'une des étapes suivantes :
le séchage (42) du matériau composite ; et
le déliantage du matériau composite.

7. Procédé selon une quelconque revendication précédente, comprenant également :
l'ajout d'un liant (62) avec ledit nitrure de bore hexagonal et ladite argile bentonite avant ladite étape de mélange.

8. Procédé selon une quelconque revendication précédente, dans lequel ledit nitrure de bore hexagonal est broyé avant d'être mélangé à l'argile bentonite.

9. Procédé selon une quelconque revendication précédente, avant ladite étape de mélange d'une argile bentonite et d'une poudre de nitrure de bore hexagonal pour former un mélange de ladite argile bentonite et d'une poudre de nitrure de bore hexagonal, comprenant également :
la combinaison de ladite argile bentonite avec de l'eau et un dispersant (32) ; et
le broyage par billes (34) de l'argile bentonite, de l'eau et du dispersant.

10. Procédé selon la revendication 9, comprenant également :
le mélange de l'argile bentonite, de l'eau, du dispersant et du nitrure de bore hexagonal dans un mélangeur pour disperseurs.

11. Procédé selon la revendication 10, comprenant également le séchage (42) du matériau composite.

12. Procédé selon une quelconque revendication précédente, dans lequel ladite taille de fraction souhaitée varie de 10 à 150 microns.

13. Procédé selon une quelconque revendication précédente, dans lequel ladite étape de traitement thermique (16) comprend un traitement thermique de calcination (44, 72).

14. Procédé selon une quelconque revendication précédente, comprenant également :
le liantage du matériau composite ; et
le déliantage du matériau composite.

15. Procédé selon une quelconque revendication précédente, dans lequel ledit traitement thermique comporte une température minimale de 500 degrés (Centrigade) Celsius et peut monter jusqu'à 1000 degrés Celsius.
